Europäisches Patentamt

European Patent Office

Office européen des brevets

(11) Publication number: 0 294 128
A2

# EUROPEAN PATENT APPLICATION

(21) Application number: 88304897.7

(51) Int. Cl.⁴: B60J 1/00

(22) Date of filing: 27.05.88

(30) Priority: 29.05.87 JP 83876/87 U

(43) Date of publication of application:
07.12.88 Bulletin 88/49

(84) Designated Contracting States:
DE FR GB

(71) Applicant: HONDA GIKEN KOGYO KABUSHIKI
KAISHA
1-1, Minamiaoyama 2-chome
Minato-ku Tokyo 107(JP)

(72) Inventor: Saitoh, Masahiro
1-2-11, Nishi
Kamifukuoka-shi Saitama(JP)
Inventor: Yoshida, Suguru
1-9-18, Tajima
Asaka-shi Saitama(JP)
Inventor: Obata, Keiichi
45-7, Ohaza Terao
Kawagoe-shi Saitama(JP)
Inventor: Ono, Yoshinobu
50-91, Shimoyasumatsu
Tokorozawa-shi Saitama(JP)

(74) Representative: Leale, Robin George et al
FRANK B. DEHN & CO. Imperial House 15-19
Kingsway
London WC2B 6UZ(GB)

(54) Attachment structure for resin window.

(57) An attachment structure for a resin window 2 includes a plurality of attachment brackets 5 mounted on an edge 2c of the resin window by insert molding. The resin window is attached to an attachment flange 3a of a body shell 3 by mechanical joint members 6 which may comprise rivets inserted through holes 5a, 3b defined in the attachment brackets and the attachment flange.

FIG. 2

## Attachment structure for resin window

The present invention relates to an attachment structure for a resin window for use on automobiles, railroad cars, aircraft, and other vehicles.

Vehicle windows such as automobile windshields are in the form of sandwich glass. Such a window glass sheet may be attached to an automobile body by bonding the window glass sheet directly to the automobile body or mounting the window glass sheet on the automobile body through a weather strip.

The direct bonding attachment is however disadvantageous in that the bonding process is complex, the cost of manufacture of the bonded assembly is high, and the bonded window glass cannot easily be dismounted. The process using the weather strip requires a weather strip of a complex cross-sectional shape, results in a high cost of manufacture, and is also problematic in that the installed window glass sheet cannot easily be detached.

According to the present invention there is provided an attachment structure for a resin window, comprising at least one attachment bracket mounted on an edge of the resin window by insert molding, a body shell having an attachment flange, and mechanical joint means for attaching the attachment bracket to the attachment flange.

The attachment bracket and the attachment flange may have respective holes arranged to register with each other, the mechanical joint means being inserted through the holes. The mechanical joint means may comprise a rivet.

Since the resin window and the body shell are joined to each other by the mechanical means, they can easily be attached to and detached from each other.

An embodiment of the invention will now be described by way of example and with reference to the accompanying drawings, in which:

Fig. 1 is a perspective view of an automobile incorporating an attachment structure for a resin window according to the present invention; and

Fig. 2 is an enlarged cross-sectional view taken along line II - II of Fig. 1.

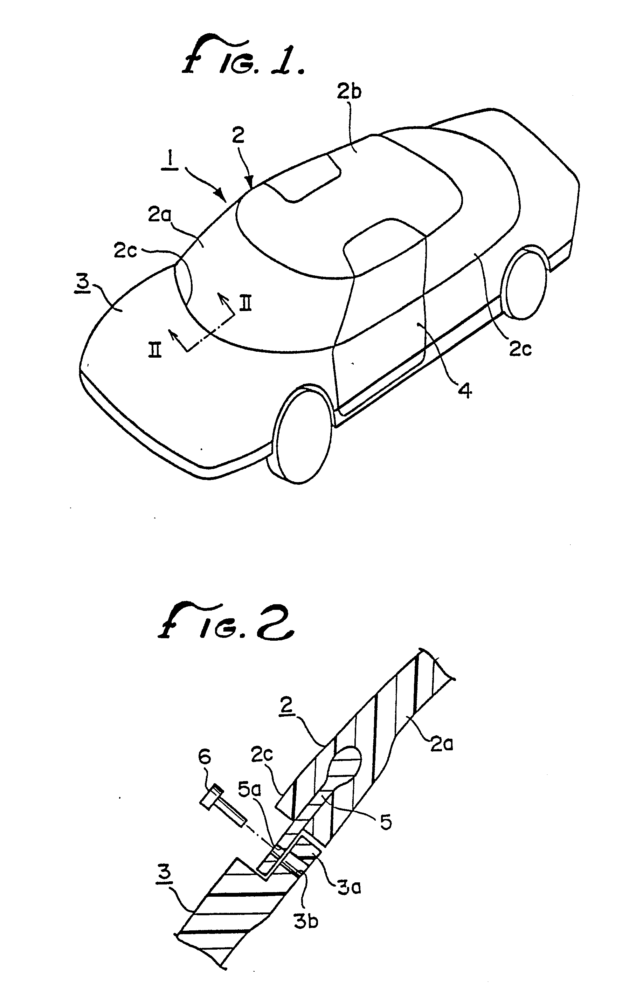

As shown in Fig. 1, an automobile 1 includes an attachment structure for a resin window according to the present invention. The automobile 1 has a resin window 2 of a unitary construction including a window 2a and a roof 2b, and a body shell 3 on which the resin window 2 is mounted. The body shell 3 is preferably integrally molded as a unitary form of a highly rigid resin for a reduced weight, but may be made of metal. The automobile 1 also has doors 4 integrally molded of a resin. The outer surface of the automobile 1 is a smooth flush surface free of surface irregularities for improved aerodynamic characteristics.

As illustrated in Fig. 2, the resin window 2 has an attachment edge 2c to which a plurality of attachment brackets 5 are attached at spaced intervals around the entire periphery of the attachment edge 2c. The attachment brackets 5 are partly embedded in the resin window 2 by insert molding. Each of the attachment brackets 5 is made of a highly rigid material such as metal, FRP, or the like, and has a hole 5a defined in its outer end.

The body shell 3 includes an attachment flange 3a having a plurality of holes 3b defined therein in registry with the holes 5a of the attachment brackets 5, respectively. The attachment brackets 5 are coupled to the attachment flange 3a by mechanical joint means 6 such as rivets extending through the holes 5a, 3b.

With the resin window 2 installed on the body shell 3, the outer surface of the resin window 2 and the outer surface of the body shell 3 lie flush with each other for improved aerodynamic characteristics.

The resin window 2 is installed on the body shell 3 in the following manner:

The holes 5a of the attachment brackets 5 integral with the resin window 2 are brought respectively into registry with the holes 3b of the attachment flange 3a of the body shell 3. Then, the rivets 6 are inserted through the holes 5a, 3b to join the attachment edge 2c of the resin window 2 to the attachment flange 3a of the body shell 3 around the entire periphery of the attachment edge 2c.

The mechanical joint means 6 which are shown as rivets in the illustrated embodiment may comprise bolts and nuts. Where bolts and nuts are employed, the resin window 2 can more easily be detached from the body shell 3.

An attachment structure according to the present invention can be incorporated in vehicles other than automobiles, such as railroad cars, airplanes and helicopters.

With the attachment structure of the present embodiment, the resin window 2 can easily be attached to the attachment bracket 3a simply by fastening the attachment brackets 5 integral with the resin window 2 to the attachment bracket 3a through the mechanical joint means. Therefore, the resin window 2 can easily be attached to and detached from the body shell 3. Furthermore, the cost of manufacture of the assembly of the resin window 2 and the body shell 3 is reduced.

It will thus be seen that the present invention, at least in its preferred forms, provides an attachment structure for a resin window, which allows the resin window to be easily attached to and detached from a body and which reduces the cost of manufacture of the body/window assembly.

It is to be clearly understood that there are no particular features of the foregoing specification, or of any claims appended hereto, which are at present regarded as being essential to the performance of the present invention, and that any one or more of such features or combinations thereof may therefore be included in, added to, omitted from or deleted from any of such claims if and when amended during the prosecution of this application or in the filing or prosecution of any divisional application based thereon. Furthermore the manner in which any of such features of the specification or claims are described or defined may be amended, broadened or otherwise modified in any manner which fall within the knowledge of a person skilled in the relevant art, for example so as to encompass, either implicitly or explicitly, equivalents or generalisations thereof.

## Claims

1. An attachment structure for a resin window, comprising:
   at least one attachment bracket mounted to an edge of the resin window by insert molding;
   a body shell having an attachment flange; and
   mechanical joint means for attaching said attachment bracket to said attachment flange.

2. An attachment structure according to claim 1, wherein said attachment bracket and said attachment flange have respective holes arranged to register with each other, said mechanical joint means being inserted through said holes.

3. An attachment structure according to claim 1 or 2, wherein said mechanical joint means comprises a rivet.

4. A vehicle having a body and a resin window, the window being attached to the body by a plurality of attachment structures as claimed in any of claims 1 to 3.

5. A vehicle as claimed in claim 4, wherein the said window is a canopy or cabin cover including a roof.

# fIG. 1.

# fIG. 2